# EUROPEAN PATENT SPECIFICATION

(11) **EP 1 932 137 B1**
(45) Date of publication and mention of the grant of the patent: **13.07.2016**
(21) Application number: 06821108.5
(22) Date of filing: 19.09.2006
(51) Int. Cl.: G09G 3/32

(54) **A METHOD OF COMPENSATING AN AGING PROCESS OF AN ILLUMINATION DEVICE**
VERFAHREN ZUR KOMPENSATION DES ALTERUNGSPROZESSES EINER BELEUCHTUNGSVORRICHTUNG
PROCEDE PERMETTANT DE COMPENSER UN PROCESSUS DE VIEILLISSEMENT D'UN DISPOSITIF D'ECLAIRAGE

(30) Priority: 29.09.2005 EP 05108988
(43) Date of publication of application: 18.06.2008
(73) Proprietor: OLEDWorks GmbH, 52068 Aachen (DE)
(72) Inventor: HENTE, Dirk, 52066 Aachen (DE); YOUNG, Edward Willem Albert, 52066 Aachen (DE)
(74) Representative: Jostarndt Patentanwalts-AG
(86) International application number: PCT/IB2006/053364
(87) International publication number: WO 2007/036837

(56) References cited:
- EP-A- 1 225 557
- EP-A2- 1 355 289
- US-A1- 2003 071 821
- US-A1- 2004 135 749

## Description

This invention relates to a method of compensating an aging process of an illumination device comprising at least one organic light emitting diode (OLED) having a light output that changes with time.

Illumination devices with organic light emitting diodes are of great interest as superior flat-panel systems. These systems utilize current passing through thin film of organic material to generate light. The color of light emitted and the efficiency of the energy conversion from current to light are determined by the composition of the organic thin-film material. However, as an OLED is used, the organic materials in the illumination device age and become less efficient at emitting light. This reduces the lifetime of the illumination device. The rate of the efficiency reduction is a function of the current density and the temperature of the illumination device. Meanwhile, changes in the temperature of the illumination device effect changes in the efficiency.

US 2004/0070558 A1 describes an organic light emitting diode (OLED) display system having addressable pixels on a substrate, the pixels having performance attributes, and a control circuit for controlling the pixels of the display device, comprising one or more OLED pixels and an OLED reference pixel located on a substrate and connected to the control circuit. The OLED reference pixel comprises the same performance attribute as the one or more OLED pixels, the OLED reference pixel having a voltage sensing circuit including a transistor connected to one of the terminals of the OLED reference pixel for sensing the voltage across the OLED reference pixel to produce a voltage signal representing the voltage across the OLED reference pixel. Furthermore, the organic light emitting diode comprises a measurement circuit to produce an output signal representative of the performance attribute of the OLED reference pixel and an analyzing circuit connected to the measurement circuit to receive the output signal, said analyzing circuit comparing the performance attributes with predetermined performance attributes, and producing a feedback signal in response thereto. Said control circuit is responsive to the feedback signal to compensate the changes in the output of the OLED pixels.

Disadvantageously, the complexity of the described OLED display system making use of reference pixels is very high. Moreover, the use of a reference pixel is not applicable to a "one pixel" lighting device, because it would imply doubling the number of installed illumination devices, which is an essential disadvantage both economically and practically.

The US 2004/0135749 A is directed to compensating for aging in OLED devices wherein a current required to produce an unchanged luminance is calculated upon a basis of a mathematical equation.

The US 2003/0071821 A1 discloses luminance compensation for emissive displays wherein a voltage to be applied to an OLED to achieve a constant luminance is calculated from a mathematical equation.

The EP 1 225 557 A1 discloses a display panel luminance correction device, wherein an anode current of a field emission display FED is measured and wherein during video idle periods arbitrary pixels are illuminated.

The invention has for its object to eliminate the above-mentioned disadvantages. In particular, it is an object of the invention to provide a method of compensating an aging process of an illumination device, which method is simple and can be easily adjusted to produce light, wherein the light output of the OLED is controlled in such a way that the brightness is constant throughout the lifetime of the illumination device.

This object is achieved by a method of compensating an aging process of an illumination device as taught by claim 1 of the present invention. Advantageous embodiments of the inventive method are defined in the subclaims.

Accordingly, there is provided a method of compensating an aging process of an illumination device comprising at least one organic light emitting diode (OLED) having an individual current-voltage characteristic and a light output that changes with time. Furthermore, a driver is connected with the OLED. The inventive method comprises a correction calculation process comprising a plurality of steps. The solution provided by the inventive method is based on the dependence of the current-voltage characteristic on the OLED. According to the inventive method, it is necessary to determine a first parameter including information about the slope of the actual current voltage characteristic of the OLED above the threshold voltage of the OLED. In the next step, a plurality of correction signals is produced based at least on the measured first parameter, an average correction signal is calculated by averaging the plurality of correction signals, and the aging process is compensated by using the average correction signal. Surprisingly, it has been found that correction signals can be generated based on the determined first parameter comprising information about the actual value of the slope of the actual current-voltage characteristic. The slope of the current-voltage characteristic (IV-curve) decreases during the lifetime of the OLED.

Preferably, the slope of the actual logarithmized current-voltage characteristic of the OLED is considered by the first parameter. That means that said characteristic includes current values being logarithmized and voltage values being non-logarithmized (log-lin current-voltage characteristic or semilog characteristic). Advantageously, the driver comprises a measurement circuit and a control circuit, wherein the measurement circuit detects the actual value of the slope of the actual semilog IV-curve of the OLED and the control circuit produces the correction signal thereto. During the correction calculation process, the driver can vary the current, and the measurement circuit detects the voltage of the OLED. Also, the slope of the IV-curve may be obtained by varying the voltage of the OLED and by measuring the current. In both embodiments, the slope of the semilog IV-curve is used as an indicator for the aging compensation of the illumination device including an OLED. The value of the detected slope of the semilog IV-curve is fed to the control circuit, which adjusts the driving current to achieve a constant light output of the illumination device. The amount of compensation to achieve a constant light output can be achieved by a mathematic function, which generates a correction signal based on the measured first parameter.

According to another preferred embodiment of the invention, the driver can comprise a look-up table in order to determine said correction signal in response to the measured slope of the semilog IV-curve. Preferably, the correction calculation process is conducted by a microcontroller-based control circuit.

The driver detects the actual value of the slope of the actual current-voltage characteristic above the threshold voltage of the OLED. The threshold voltage is defined as the minimum voltage across the OLED that causes illumination. The threshold voltage increases during the lifetime of OLED due to aging. As a consequence, the normal operating voltage also increases. The threshold voltage of the OLED can be stored in a memory of the driver. Alternatively, the measurement circuit measures the threshold voltage of the OLED before detecting the actual value of the slope of the actual semilog IV-curve. By considering the semilog IV-curve above the threshold voltage of the OLED, the quality of the correction signal to compensate the changes in the light output can be improved substantially.

Depending on the calculation process, the detected slope of the actual semilog IV-curve may be the only parameter for calculating the correction signal. According to a preferred embodiment of the invention, the calculation process comprises more than one parameter to generate the correction signal. An additional parameter may be the on-time of the OLED, which is detected by the measurement circuit. The driver can also compute an average on-time of the OLED, which can be considered in the correction calculation process as well.

The temperature may be an additional parameter indicative of aging. For example, the temperature information can be determined by a temperature sensor and sent to the control circuit. The temperature measurement can be performed every few minutes and the result can be stored in a memory of the driver. Also, the temperature information can be read from a look-up table, being a fixed part of the driver.

According to another preferred embodiment, the current-voltage characteristic of the unused OLED can be an important parameter for the correction calculation process. In this case, the actual value of the slope of the actual semilog IV-curve and the value of the slope of the unused semilog IV-curve are compared in order to get information about the aging of the OLED. Preferably, the current-voltage characteristic of the unused OLED is stored in the driver.

Additionally, the method according to the present invention may be implemented on a computer system. A computer program adapted to perform the steps of the present invention automatically generates the correction signal to compensate for the changes in the light output of the OLED. With such a computer program, which is adapted to operate the inventive method, the correction calculation process according to the present invention may be done automatically and with a lower overall energy consumption.

The above-described steps of the correction calculation process may be performed continuously or periodically during use, at power-up or power-down. Alternatively, the correction calculation process may be performed in response to user signals supplied to the control circuit. Any change in correction can be limited in magnitude, for example to a 5 % change. Correction changes can also be averaged over time. Alternatively, an actual correction can be made only after taking several readings, for example every time the OLED is powered on, a correction calculation is performed and the number of calculated correction signals are averaged to produce the actual correction signal that is applied to the OLED. During the normal illumination process of the OLED, the correction calculation process is conducted, which is not visible for the human eye.

The invention relates to an illumination device comprising at least one organic light emitting diode (OLED) having a light output that changes with time and a driver connected with the OLED having an individual current-voltage characteristic, wherein the illumination device comprises a measurement circuit for determining a first parameter including information about the slope of the actual current-voltage characteristic of the OLED above the threshold voltage of the OLED and a control circuit is adapted to produce a plurality of correction signals based at least on the first parameter being indicative of aging, to calculate an average correction signal by averaging the plurality of correction signals and to compensate the aging process by using the average correction signal. The amount of compensation for achieving a constant light output is either a fixed part of the driver or realized in form of a controlling algorithm of a microcontroller-based circuit.

The compensation characteristic depends on the OLED and can be changed programmatically.

The illumination device as well as the method mentioned above can be used in a variety of systems, such as inter alia automotive systems, home lighting systems, backlighting systems for displays, ambient lighting systems, flashes for cameras (with adjustable color) or shop lighting systems.

The aforementioned components, as well as the claimed components and the components to be used in accordance with the invention in the described embodiments, are not subject to any special exceptions with respect to size, shape, material selection as technical concept, such that the selection criteria known in the pertinent field can be applied without limitations.

Additional details, characteristics and advantages of the object of the invention are disclosed in the subclaims, and the following description of the respective Figures -which is for illustrative purposes only - relates to a preferred embodiment of the illumination device according to the invention.
Figure 1 shows a very schematic view of an illumination device according to the present invention,
Figure 2a shows semilog IV-curves of an OLED according to the illumination device of Figure 1 as a function of temperature,
Figure 2b shows two semilog IV-curves of an OLED according to Figure 1 as a function of lifetime

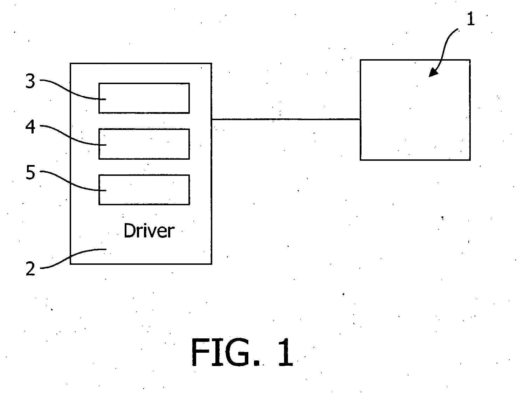

Figure 1 illustrates an illumination device with one organic light emitting diode 1 (OLED), wherein the light output of the illumination device changes with time. The illumination device comprises a driver 2, which is connected with the OLED 1. The driver 2 includes a measurement circuit 3 and a control circuit 4, the measurement circuit 3 determining the actual value of the slope of the actual logarithmized current-voltage characteristic of the OLED 1. In the shown embodiments of the invention, the current values are logarithmized, and the voltage values are non-logarithmized (semilog current-voltage characteristic). A control circuit 4 produces a correction signal based on the measured actual value of the slope of the actual semilog current-voltage characteristic (IV-curve) in order to compensate for the changes in the light output of the OLED 1. The determined slope of the IV-curve is a significant parameter for the aging of the OLED 1.

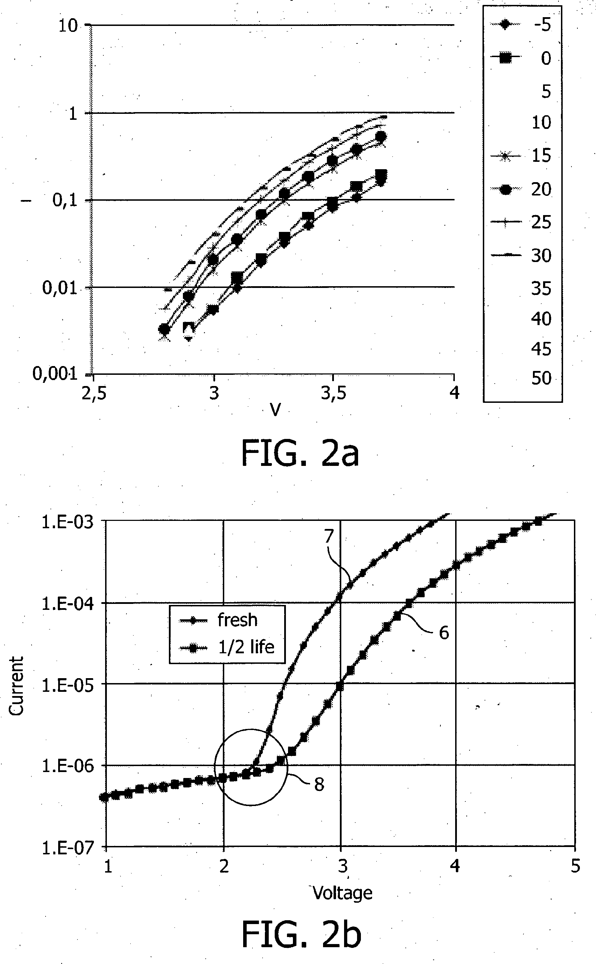

It has been found that the voltage across the OLED 1 increases with operating time for a constant driving current, which is illustrated in Figure 2b. Referring to Figure 2a, the voltage increases also with increasing temperature. Thus, the voltage cannot be used as an aging indicator of an OLED device 1, because the aging depends on the temperature and the operating time. However, comparing both diagrams, it can be seen that the slope of the semilog IV-curves changes substantially with operating time while the slope is almost independent of the temperature. Changes in the temperature cause only a voltage shift of the semilog IV-characteristic, which is illustrated in Figure 2b.

According to the shown embodiment, the driver 2 detects the actual value of the slope of the actual semilog IV-curve above the threshold voltage of the OLED 1, which is illustrated in Figure 2b by the reference number 8. Furthermore, the semilog current-voltage characteristic 7 of the unused OLED 1 and the semilog current-voltage characteristic 6 of the OLED 1 with a 1/2 lifetime are illustrated in Figure 2b, which shows that essential differences between both IV-curves 6, 7 exist only in the area above the threshold voltage 8 of the OLED 1.

During the illumination process, the driver 2 measures the slope of the actual semilog current-voltage characteristic of the OLED 1. After that a correction signal based on the detected actual value of the slope of the semilog IV-curve is produced, which adjusts the driving current to achieve a constant light output. Additional parameters, e.g. on-time of the OLED 1 or temperature, can also be used for the process of generating the correction signal. In one possible embodiment of the invention, these additional parameters may be read from a memory 5 of the driver 2. Alternatively, these additional parameters can be measured before or during the correction calculation process. In the shown embodiment, the process for generating the collection signal is conducted by an algorithm of a microcontroller situated(?) in the control circuit 4.

In a possible embodiment of the invention, the calculation result for the OLED correction signal including the information about lifetime and light output can be stored in said memory 5. An advantage of locally storing this additional information specific to an OLED tile 1 on a memory 5 is that, when new OLED tiles 1 are added to OLED tile 1 assembly or when OLED tiles 1 are rearranged within OLED tile 1 assembly, valuable color correction data, aging factors, and other details are also transported.

### LIST OF NUMERALS

- 1: OLED
- 2: driver
- 3: measurement circuit
- 4: control circuit
- 5: memory device
- 6: semilog IV-curve (1/2 lifetime)
- 7: semilog IV-curve (unused OLED)
- 8: area of threshold voltage

## Claims

1. A method of compensating an aging process of an illumination device comprising
at least one organic light emitting diode (1) (OLED) having a light output that changes with time,
a driver (2) connected with the OLED (1) having an individual current-voltage characteristic,
and comprising a correction calculation process including the following steps:
determining a first parameter including information about the slope of the actual current-voltage characteristic of the OLED (1),
**characterized in that**
the information about the slope of the actual current-voltage characteristic of the OLED (1) is determined above the threshold voltage of the OLED (1),
producing a plurality of correction signals based at least on the first parameter,
calculating an average correction signal by averaging the plurality of correction signals;
and compensating for the aging process using the average correction signal.

2. The method as claimed in claim 1, **characterized in that** the slope of the actual semilog current-voltage characteristic of the OLED (1) is considered by the first parameter.

3. The method as claimed in claim 1 or 2, **characterized in that** the driver (2) comprises a measurement circuit (3) and a control circuit (4), wherein the measurement circuit (3) detects the actual value of the slope of the actual semilog current-voltage characteristic of the OLED (1) and the control circuit (4) produces the correction signal thereto.

4. The method according to any one of the preceding claims, **characterized in that** the measurement circuit (3) measures the on-time of the OLED (1), being a second parameter for aging.

5. The method according to any one of the preceding claims, **characterized in that** a third parameter comprises the current-voltage characteristic of an unused OLED (1).

6. The method according to any one of the preceding claims, **characterized in that** the driver (2) comprises a mathematical function and/or a lookup table to generate the correction signal based on the parameters.

7. The method according to any one of the preceding claims, **characterized in that** the driver (2) comprises a hardware circuit, in particular a passive network, to determine the correction signal in response to the measured first parameter.

8. The method according to any one of the preceding claims, **characterized in that** the parameters for aging and the calculated correction signal are stored in a memory device (5).

9. An illumination device comprising at least one organic light emitting diode (1) (OLED) having a light output that changes with time and
a driver (2) connected with the OLED (1) having an individual current-voltage characteristic, wherein the illumination device comprises:
a measurement circuit (3) for determining a first parameter including information about the slope of the actual current-voltage characteristic of the OLED (1),
**characterized in that**
the measurement circuit (3) for determining a first parameter is adapted to determine the information about the slope of the actual current-voltage characteristic of the OLED (1) above the threshold voltage of the OLED (1), and a control circuit (4) is adapted to produce a plurality of correction signals based at least on the first parameter, and the control circuit (4) is further adapted to calculate an average correction signal by averaging the plurality of correction signals to compensate the aging process using the average correction signal.

10. The illumination device as claimed in claim 9 with a method according to claims 1 to 8.

## Patentansprüche

1. Verfahren zum Kompensieren eines Alterungsprozesses einer Beleuchtungsvorrichtung, wobei die Beleuchtungsvorrichtung umfasst: wenigstens eine organische Leuchtdiode (1) (OLED), die eine Lichtausgabe aufweist, die sich mit der Zeit ändert, einen Treiber (2), der mit der OLED (1) verbunden ist, der eine individuelle Strom-Spannungs-Kennlinie aufweist, und wobei das Verfahren einen Korrekturberechnungsprozess umfasst, der die folgenden Schritte enthält: Bestimmen eines ersten Parameters, der Informationen über den Anstieg der tatsächlichen Strom-Spannungs-Kennlinie der OLED (1) enthält, **dadurch gekennzeichnet, dass** die Informationen über den Anstieg der tatsächlichen Strom-Spannungs-Kennlinie der OLED (1) über die Schwellenspannung der OLED (1) bestimmt werden, Erzeugen mehrerer Korrektursignale auf der Grundlage wenigstens des ersten Parameters, Berechnen eines mittleren Korrektursignals durch Mitteln der mehreren Korrektursignale, und Kompensieren des Alterungsprozesses unter Verwendung des mittleren Korrektursignals.

2. Verfahren nach Anspruch 1, **dadurch gekennzeichnet, dass** der Anstieg der tatsächlichen halblogarithmischen Strom-Spannungs-Kennlinie der OLED (1) durch den ersten Parameter berücksichtigt wird.

3. Verfahren nach Anspruch 1 oder 2, **dadurch gekennzeichnet, dass** der Treiber (2) eine Messschaltung (3) und eine Steuerschaltung (4) umfasst, wobei die Messschaltung (3) den tatsächlichen Wert des Anstiegs der tatsächlichen halblogarithmischen Strom-Spannungs-Kennlinie der OLED (1) detektiert und dass die Steuerschaltung (4) das Korrektursignal dazu erzeugt.

4. Verfahren nach einem der vorhergehenden Ansprüche, **dadurch gekennzeichnet, dass** die Messschaltung (3) die Einschaltzeit der OLED (1), die ein zweiter Parameter für die Alterung ist, misst.

5. Verfahren nach einem der vorhergehenden Ansprüche, **dadurch gekennzeichnet, dass** ein dritter Parameter die Strom-Spannungs-Kennlinie einer ungenutzten OLED (1) umfasst.

6. Verfahren nach einem der vorhergehenden Ansprüche, **dadurch gekennzeichnet, dass** der Treiber (2) eine mathematische Funktion und/oder eine Nachschlagetabelle, um auf der Grundlage der Parameter das Korrektursignal zu erzeugen, umfasst.

7. Verfahren nach einem der vorhergehenden Ansprüche, **dadurch gekennzeichnet, dass** der Treiber (2) eine Hardwareschaltung, insbesondere ein passives Netz, umfasst, um in Ansprechen auf den gemessenen ersten Parameter das Korrektursignal zu bestimmen.

8. Verfahren nach einem der vorhergehenden Ansprüche, **dadurch gekennzeichnet, dass** die Parameter für das Altern und das berechnete Korrektursignal in einer Speichervorrichtung (5) gespeichert werden.

9. Beleuchtungsvorrichtung, die wenigstens eine organische Leuchtdiode (1) (OLED) umfasst, die eine Lichtausgabe aufweist, die sich mit der Zeit ändert, und einen Treiber (2), der mit der OLED (1) verbunden ist, der eine individuelle Strom-Spannungs-Kennlinie aufweist, wobei die Beleuchtungsvorrichtung umfasst: eine Messschaltung (3) zum Bestimmen eines ersten Parameters, der Informationen über den Anstieg der tatsächlichen Strom-Spannungs-Kennlinie der OLED (1) enthält, **dadurch gekennzeichnet, dass** die Messschaltung (3) zum Bestimmen eines ersten Parameters dafür ausgelegt ist, die Informationen über den Anstieg der tatsächlichen Strom-Spannungs-Kennlinie der OLED (1) über die Schwellenspannung der OLED (1) zu bestimmen, und eine Steuerschaltung (4) dafür ausgelegt ist, auf der Grundlage wenigstens des ersten Parameters mehrere Korrektursignale zu erzeugen, und die Steuerschaltung (4) ferner dafür ausgelegt ist, durch Mitteln der mehreren Korrektursignale ein mittleres Korrektursignal zu berechnen, um den Alterungsprozess unter Verwendung des mittleren Korrektursignals zu kompensieren.

10. Beleuchtungsvorrichtung nach Anspruch 9 mit einem Verfahren nach den Ansprüchen 1 bis 8.

## Revendications

1. Procédé de compensation d'un processus de vieillissement d'un dispositif d'éclairage comprenant au moins une diode électroluminescente organique (1) (OLED) présentant une puissance lumineuse qui change avec le temps, un pilote (2) connecté à l'OLED (1) présentant une caractéristique de tension de courant individuelle, et comprenant un procédé de calcul de correction comprenant les étapes suivantes : détermination d'un premier paramètre comprenant des informations sur la pente de la caractéristique de tension de courant effective de l'OLED (1), **caractérisé en ce que** les informations sur la pente de la caractéristique de tension de courant effective de l'OLED (1) sont déterminées au-dessus de la tension seuil de l'OLED (1), production d'une pluralité de signaux de correction basés au moins sur le premier paramètre, calcul d'un signal de correction moyen en faisant la moyenne de la pluralité de signaux de correction, et compensation du processus de vieillissement en utilisant le signal de correction moyen.

2. Procédé selon la revendication 1, **caractérisé en ce que** la pente de la caractéristique de tension de courant semilog effective de l'OLED (1) est prise en compte par le premier paramètre.

3. Procédé selon la revendication 1 ou 2, **caractérisé en ce que** le pilote (2) comprend un circuit de mesure (3) et un circuit de commande (4), dans lequel le circuit de mesure (3) détecte la valeur effective de la pente de la caractéristique de tension de courant semilog effective de l'OLED (1) et le circuit de commande (4) produit le signal de correction envers celui-ci.

4. Procédé selon l'une quelconque des revendications précédentes, **caractérisé en ce que** le circuit de mesure (3) mesure le temps de marche de l'OLED (1), étant un deuxième paramètre du vieillissement.

5. Procédé selon l'une quelconque des revendications précédentes, **caractérisé en ce qu'**un troisième paramètre comprend la caractéristique de tension de courant d'une OLED (1) non utilisée.

6. Procédé selon l'une quelconque des revendications précédentes, **caractérisé en ce que** le pilote (2) comprend une fonction mathématique et/ou un tableau de consultation pour générer le signal de correction basé sur les paramètres.

7. Procédé selon l'une quelconque des revendications précédentes, **caractérisé en ce que** le pilote (2) comprend un circuit matériel, en particulier un réseau passif, pour déterminer le signal de correction en réponse au premier paramètre mesuré.

8. Procédé selon l'une quelconque des revendications précédentes, **caractérisé en ce que** les paramètres de vieillissement et le signal de correction calculé sont conservés dans un dispositif de mémoire (5).

9. Dispositif d'éclairage comprenant au moins une diode électroluminescente organique (1) (OLED) présentant une puissance lumineuse qui change avec le temps, un pilote (2) connecté à l'OLED (1) présentant une caractéristique de tension de courant individuelle, dans lequel le dispositif d'éclairage comprend : un circuit de mesure (3) pour déterminer un premier paramètre incluant des informations sur la pente de la caractéristique de tension de courant effective de l'OLED (1), **caractérisé en ce que** le circuit de mesure (3) pour déterminer un premier paramètre est adapté pour déterminer les informations sur la pente de la caractéristique de tension de courant effective de l'OLED (1) au-dessus de la tension seuil de l'OLED (1), et un circuit de commande (4) est adapté pour produire une pluralité de signaux de correction basés au moins sur le premier paramètre, et le circuit de commande (4) est en outre adapté pour calculer un signal de correction moyen en faisant la moyenne de la pluralité de signaux de correction pour compenser le processus de vieillissement en utilisant le signal de correction moyen.

10. Dispositif d'éclairage selon la revendication 9 comprenant un procédé selon les revendications 1 à 8.
